# EUROPEAN PATENT APPLICATION

(11) **EP 4 350 818 A1**
(43) Date of publication of application: **10.04.2024**
(21) Application number: 22811349.4
(22) Date of filing: 25.05.2022
(51) Int. Cl.: H01M 8/04, H01M 8/04111, H01M 8/0606, H01M 8/0662, H01M 8/0668, H01M 8/10

(54) **FUEL CELL POWER GENERATION SYSTEM**

(30) Priority: 25.05.2021 JP 2021087837
(71) Applicant: Mitsui O.S.K. Lines, Ltd., Tokyo 105-8688 (JP)
(72) Inventor: UMEMURA, Hitomi, Tokyo 105-8688 (JP); NAKAMURA, Masaki, Tokyo 105-8688 (JP)
(74) Representative: Meissner Bolte Partnerschaft mbB
(86) International application number: PCT/JP2022/021374
(87) International publication number: WO 2022/250079

(57) **Abstract**

A fuel cell power generation system (10) includes a fuel cell (6) generating electric power with hydrogen, a condenser (8) extracting hydrogen contained in steam discharged from the fuel cell (6), and a hydrogen supply route which supplies hydrogen extracted by the condenser (8) to the fuel cell (6).

## Description

### Technical Field

The present invention relates generally to a fuel cell power generation system.

### Background Art

In general, using hydrogen as fuel in fuel cells is known.

However, hydrogen supplied to the fuel cell may be discharged as it is without reacting.

### Summary of Invention

Embodiments of the present invention aim to provide a fuel cell power generation system that improves the consumption efficiency of hydrogen supplied as fuel.

A fuel cell power generation system according to an aspect of the present invention includes a fuel cell generating electric power with hydrogen, a condenser extracting hydrogen contained in steam discharged from the fuel cell, and a hydrogen supply route which supplies hydrogen extracted by the condenser to the fuel cell.

### Brief Description of Drawings

FIG. 1 is a configuration diagram showing a configuration of a fuel cell power generation system according to a first embodiment of the present invention.
FIG. 2 is a configuration diagram showing an example of a configuration for reusing hydrogen contained in steam discharged from a fuel cell according to the first embodiment.
FIG. 3 is a configuration diagram showing an example of a configuration for cooling mixed gas sent to a carbon dioxide separator according to the first embodiment.
FIG. 4 is a configuration diagram showing an example of the configuration of a carbon dioxide liquefaction device according to the first embodiment.
FIG. 5 is a configuration diagram showing a configuration of a fuel cell power generation system according to a second embodiment.

### Mode for Carrying Out the Invention

### (First Embodiment)

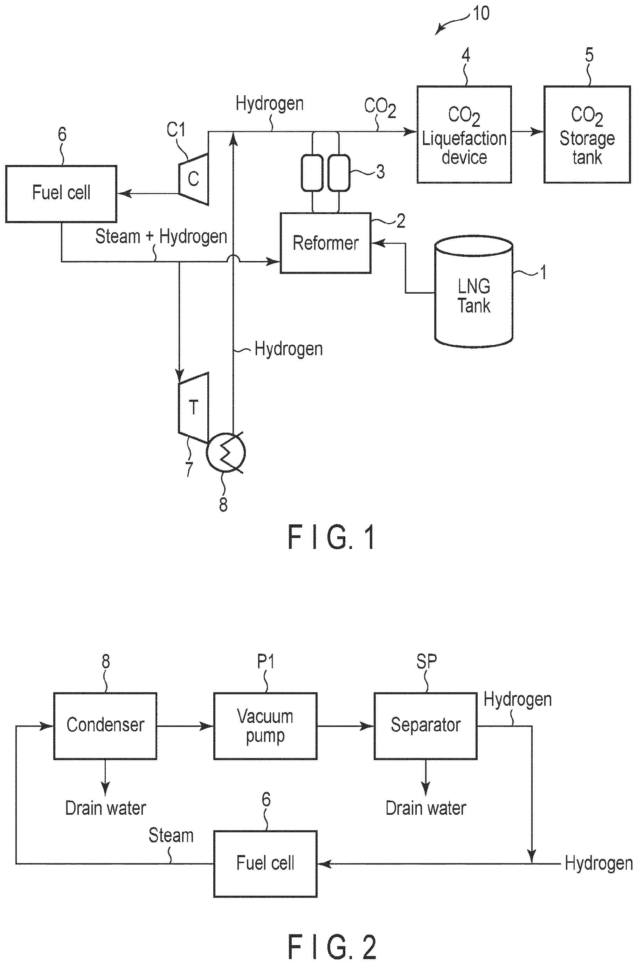

FIG. 1 is a configuration diagram showing a configuration of a fuel cell power generation system 10 according to a first embodiment of the present invention. The same portions in the drawings are denoted by the same reference numerals and redundant descriptions are omitted as appropriate.

The fuel cell power generation system 10 is not limited to being fixed and installed on land or sea, but may be provided in a mobile object such as a ship, a vehicle, or an aircraft.

The fuel cell power generation system 10 comprises an LNG tank 1, a reformer 2, a carbon dioxide separator 3, a carbon dioxide liquefaction device 4, a carbon dioxide storage tank 5, a fuel cell 6, a steam turbine 7, and a condenser 8.

LNG is used as the fuel for power generation, but the embodiment may be configured using liquefied petroleum gas (LPG), similarly to LNG. Besides, the fuel of the fuel cell 6 may be any substance as long as it contains hydrogen atoms. For example, such fuels may be alcohols such as ethanol or methanol, hydrogen or ammonia.

The LNG tank 1 is equipment for storing LNG. The LNG tank 1 supplies boil off gas (BOG) to the reformer 2 in accordance with the amount of demand power of the fuel cell 6. BOG is gaseous natural gas that is generated by vaporized LNG stored in the LNG tank 1 by heat ingress and/or heat input.

The LNG tank 1 may be any equipment capable of storing LNG. In addition, when the fuel cell power generation system 10 is applied to a ship, the LNG tank 1 may be an LNG tank for transporting LNG or a fuel tank for storing LNG as fuel for a power source. In addition, any number of LNG tanks 1 may be provided. The LNG tank 1 may not be part of the configuration of the fuel cell power generation system 10 and, if BOG is supplied to the reformer 2, the fuel cell power generation system 10 may be configured in any manner.

The reformer 2 is a device that adds high-temperature steam (for example, approximately 900°C) to the BOG supplied from the LNG tank 1 to chemically decompose it into mainly two components such as hydrogen and carbon dioxide. For example, the reformer 2 uses steam discharged from the fuel cell 6 as high-temperature steam. This steam may be heated by a heater and supplied. The reformer 2 adds high-temperature steam to LNG to cause a reforming reaction (endothermic reaction) and a shift reaction, and thereby generates a mixed gas of hydrogen and carbon dioxide. Hydrogen and carbon monoxide are generated by the reforming reaction with methane (LNG) and steam. Furthermore, hydrogen and carbon dioxide are generated by the shift reaction with carbon monoxide and steam. BOG is thereby chemically decomposed into hydrogen and carbon dioxide. The reformer 2 supplies the generated mixed gas of hydrogen and carbon dioxide to the carbon dioxide separator 3.

Hydrogen that has not reacted in the fuel cell 6 is contained in the steam discharged from the fuel cell 6. Therefore, such unreacted hydrogen is reused via the reformer 2 by using the steam discharged from the fuel cell 6. Incidentally, equipment or the like for supplying high-temperature steam to the reformer 2 without using the steam discharged from the fuel cell 6 may be provided separately.

Components other than hydrogen and carbon dioxide may be mixed in the mixed gas after the BOG is decomposed. For example, BOG or carbon monoxide which is not sufficiently decomposed but remains may be mixed or impurities contained in BOG may be mixed.

A carbon dioxide separator (CCS, carbon capture system) 3 physically separates the mixed gas of hydrogen and carbon dioxide chemically decomposed by the reformer 2 into carbon dioxide gas and hydrogen gas. For example, the carbon dioxide separator 3 separates the mixed gas by pressure swing adsorption (PSA) method, but any method may be used to separate the mixed gas. After separating the mixed gas, the carbon dioxide separator 3 supplies the hydrogen gas to the fuel cell 6 and sends the carbon dioxide gas to the carbon dioxide liquefaction device 4. Incidentally, a compressor C1 for compressing the hydrogen gas may be appropriately provided in a route (for example, a pipeline) for sending the hydrogen gas from the carbon dioxide separator 3 to the fuel cell 6.

The carbon dioxide liquefaction device 4 cools the carbon dioxide gas sent from the carbon dioxide separator 3 to liquefy carbon dioxide. The carbon dioxide liquefaction device 4 makes the liquefied carbon dioxide to be stored in the carbon dioxide storage tank 5. Carbon dioxide stored in the carbon dioxide storage tank 5 can be carried to any place and disposed of freely. For example, carbon dioxide may be disposed of by being sequestrated in the underground or may be used for applications that require carbon dioxide as a resource.

Incidentally, the carbon dioxide liquefaction device 4 may be configured in any manner as long as the device can liquefy the carbon dioxide gas. In addition, the carbon dioxide liquefaction device 4 and the carbon dioxide storage tank 5 may not be provided. Carbon dioxide separated by the carbon dioxide separation device 3 may be treated by a device or the like or may be released to the atmosphere.

The fuel cell 6 is a solid oxide fuel cell (SOFC) that generates electric power using oxygen in the air taken in from the atmosphere and hydrogen gas supplied by the carbon dioxide separator 3. The fuel cell 6 supplies the generated electric power to the load. Steam containing hydrogen discharged from the fuel cell 6 and remaining unreacted is sent to the reformer 2 and the steam turbine 7. The fuel cell 6 is described as a solid oxide type, but other types of fuel cells may be applied.

The steam turbine 7 performs steam turbine power generation using the steam exhausted from the fuel cell 6. For example, the steam remaining after removing the steam necessary for the reformer 2, of the steam exhausted from the fuel cell 6, is sent to the steam turbine 7. Incidentally, all of the steam exhausted from the fuel cell 6 may be sent to the steam turbine 7 and may not be sent to the reformer 2. In addition, the power generation using the steam turbine 7 may be used in any manner. For example, the steam turbine 7 may supply the generated electric power to the load together with the electric power generated by the fuel cell 6. Incidentally, the steam exhausted from the fuel cell 6 may be sent directly to the condenser 8 without providing the steam turbine 7.

The condenser 8 is connected to the steam turbine 7. The condenser 8 converts the steam sent from the fuel cell 6 through the steam turbine 7 back into water and extracts hydrogen contained in the steam. The condenser 8 supplies hydrogen extracted from the steam to the fuel cell 6 as fuel. The hydrogen extracted from the condenser 8 is reused in the fuel cell 6 in this manner. In addition, the water extracted from the condenser 8 may be reused or discarded. When draining water from the condenser 8 to the outside, a condensate pump for draining water may be provided.

FIG. 2 is a configuration diagram showing an example of a configuration for reusing hydrogen contained in the steam discharged from the fuel cell 6 according to the embodiment. The configuration is not limited to that described here, but any configuration may be used.

A vacuum pump P1 and a separator SP are provided in a route (for example, a pipeline) for supplying hydrogen gas from the condenser 8 to the fuel cell 6.

A gas containing a large amount of hydrogen is supplied from the condenser 8 to the vacuum pump P1. The vacuum pump P1 sends the hydrogen-rich gas supplied from the condenser 8, to the separator SP, while keeping the condenser 8 in a vacuum state. The separator SP removes impurities (such as water, carbon dioxide, or the like) other than hydrogen gas from the gas supplied from the vacuum pump P1. The separator SP thereby extracts hydrogen gas with high purity. The separator SP supplies the extracted hydrogen gas to the fuel cell 6. A compressor for compressing the hydrogen gas may be provided in the route through which the separator SP sends the hydrogen gas to the fuel cell 6.

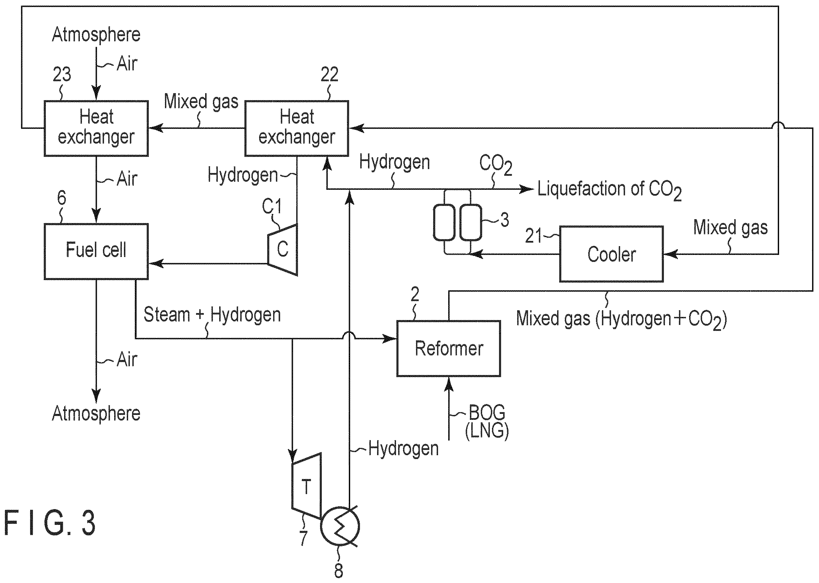

FIG. 3 is a configuration diagram showing an example of a configuration for cooling the mixed gas sent to the carbon dioxide separator 3 in the embodiment.

Since the mixed gas of hydrogen and carbon dioxide discharged from the reformer 2 has a high temperature exceeding a permissible temperature of the carbon dioxide separator 3, the mixed gas cannot be sent to the carbon dioxide separator 3 unless cooled. Therefore, a cooler 21 for cooling the mixed gas is provided in the middle of the route (for example, pipeline) of the mixed gas sent from the reformer 2 to the carbon dioxide separator 3. A configuration in a case where two heat exchangers 22 and 23 are provided in addition to the cooler 21 will be described with reference to FIG. 3.

The first heat exchanger 22 cools the mixed gas of hydrogen and carbon dioxide discharged from the reformer 2 with the hydrogen gas supplied as fuel from the carbon dioxide separator 3 or the condenser 8 to the fuel cell 6. As a result, the mixed gas is cooled and the hydrogen gas supplied to the fuel cell 6 as fuel is heated. Therefore, the mixed gas can be cooled and the hydrogen gas used as fuel for the fuel cell 6 can be heated.

The second heat exchanger 23 cools the mixed gas cooled by the first heat exchanger 22 with oxygen (air) taken in as fuel by the fuel cell 6. As a result, the mixed gas is cooled and the air taken into the fuel cell 6 as fuel is heated. Therefore, the mixed gas can be cooled and the oxygen (air) used as fuel for the fuel cell 6 can be heated.

The cooler 21 cools the mixed gas discharged from the reformer 2 and cooled by the two heat exchangers 22 and 23 to a temperature lower than or equal to the permissible temperature of the carbon dioxide separator 3. The cooler 21 thus sends the mixed gas cooled to the temperature lower than or equal to the permissible temperature to the carbon dioxide separator 3.

Incidentally, any number of coolers 21 may be provided. In addition, any number of heat exchangers 22 and 23 may be provided or may not be provided. Furthermore, the order of cooling by coolers and heat exchangers may be determined arbitrarily.

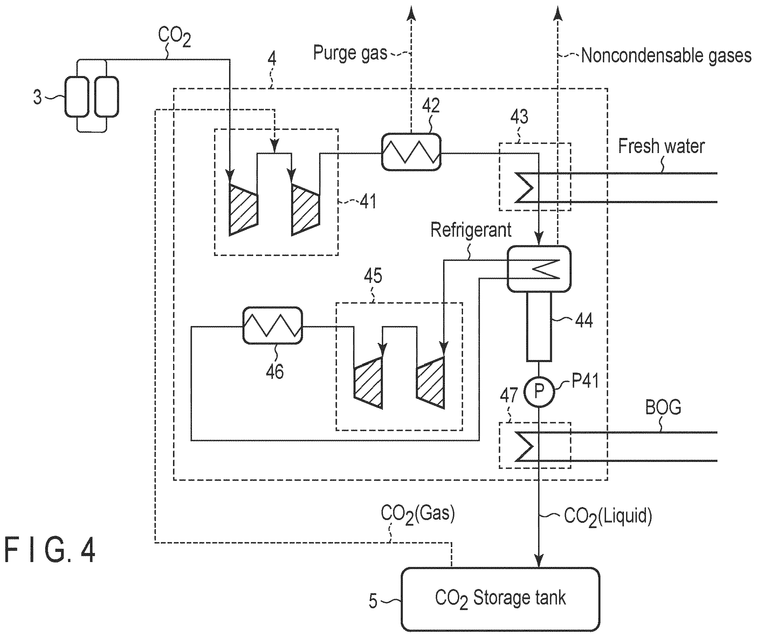

FIG. 4 is a configuration diagram showing an example of the configuration of the carbon dioxide liquefaction device 4 according to the embodiment. The configuration of the carbon dioxide liquefaction device 4 described here is just an example, and any configuration may be used as long as the carbon dioxide gas can be liquefied.

The carbon dioxide liquefaction device 4 comprises a carbon dioxide compressor 41, a dehumidifier 42, a first heat exchanger 43, a carbon dioxide liquefier 44, a refrigerator 45, a refrigerant condenser 46, and a second heat exchanger 47.

The carbon dioxide compressor 41 takes in and compresses the carbon dioxide gas separated by the carbon dioxide separator 3. The carbon dioxide compressor 41 sends the compressed carbon dioxide gas to the dehumidifier 42. In addition, the carbon dioxide compressor 41 may also take in carbon dioxide vaporized inside the carbon dioxide storage tank 5 in addition to the carbon dioxide gas from the carbon dioxide separator 3 and compress them together.

The dehumidifier 42 dries the carbon dioxide gas sent from the carbon dioxide compressor 41. A purge gas is thereby released from the carbon dioxide gas. The dehumidifier 42 sends the dried carbon dioxide gas to the first heat exchanger 43. The dehumidifier 42 may not be provided.

The first heat exchanger 43 cools the carbon dioxide gas sent from the dehumidifier 42 with fresh water. Water (seawater or the like) pumped up from the outside of the ship by a water intake pump or the like may be used instead of fresh water. The first heat exchanger 43 sends the cooled carbon dioxide gas to the carbon dioxide liquefier 44.

The carbon dioxide liquefier 44 cools and liquefies the carbon dioxide gas sent from the first heat exchanger 43. Noncondensable gases that are not condensed thereby escape from the carbon dioxide. The carbon dioxide liquefier 44 sends the liquefied carbon dioxide to the second heat exchanger 47.

The carbon dioxide liquefier 44 cools the carbon dioxide gas with a refrigerant. The refrigerant used to cool the carbon dioxide gas is sent to the refrigerator 45 and cooled. The refrigerant cooled by the refrigerator 45 is sent to the refrigerant condenser 46 and compressed. The refrigerant compressed by the refrigerant condenser 46 is supplied to the carbon dioxide liquefier 44 and used to cool the carbon dioxide gas.

The second heat exchanger 47 cools the liquefied carbon dioxide sent from the carbon dioxide liquefier 44 by the BOG. The second heat exchanger 47 cools and sends the liquefied carbon dioxide to the carbon dioxide storage tank 5.

According to the embodiment, the following advantages can be obtained.

By providing the condenser 8 and extracting the hydrogen contained in the steam discharged from the fuel cell 6, the consumption efficiency of hydrogen contained in the LNG can be improved.

By providing the steam turbine 7 in the middle of the route through which the steam is discharged from the fuel cell 6 to the condenser 8, electric power can be generated by the steam discharged from the fuel cell 6.

By separating the BOG into hydrogen and carbon dioxide, removing carbon dioxide, and supplying only hydrogen as fuel to the fuel cell 6, the recovery of carbon dioxide can be performed more easily than supplying the BOG directly to the fuel cell 6 as the fuel. The amount of carbon dioxide emitted from the fuel cell power generation system 10 can be thereby suppressed.

By using the steam discharged from the fuel cell 6 as the high-temperature steam necessary to cause the reforming reaction to be made in the reformer 2, the overall energy efficiency can be increased and the equipment costs of the fuel cell power generation system 10 can be reduced as compared to providing the device for producing high-temperature steam alone. In addition, since hydrogen is contained in the steam discharged from the fuel cell 6, the consumption efficiency of hydrogen contained in the LNG can be improved.

The heat exchangers 22 and 23 are provided, and the mixed gas discharged from the reformer 2 is cooled by utilizing hydrogen supplied from the carbon dioxide separator 3 to the fuel cell 6 and the air used for the power generation in the fuel cell 6. The inlet temperature of the mixed gas the cooler 21 can be thereby made lower than that in a case of cooling the mixed gas without providing the heat exchangers 22 and 23. Therefore, the mixed gas can be efficiently cooled, and the cooler 21 with a lower cooling capacity can be adopted. In addition, since hydrogen and the air supplied to the fuel cell 6 are also heated, the power generation efficiency of the fuel cell 6 can be improved.

By using the BOG to cool carbon dioxide in the carbon dioxide liquefaction device 4, the energy efficiency of cooling carbon dioxide can be improved.

### (Second Embodiment)

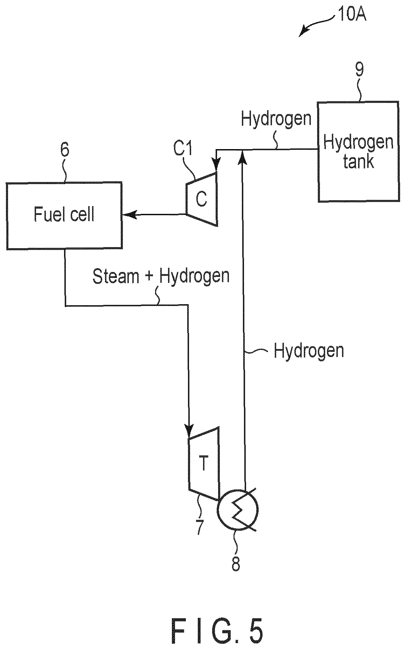

FIG. 5 is a configuration diagram showing a configuration of a fuel cell power generation system 10A according to a second embodiment of the invention.

In the fuel cell power generation system 10A, the LNG tank 1, the reformer 2, the carbon dioxide separator 3, the carbon dioxide liquefaction device 4, and the carbon dioxide storage tank 5 are removed from the fuel cell power generation system 10 according to the first embodiment shown in FIG. 1 and a hydrogen tank 9 is provided instead. Other points are the same as the fuel cell power generation system 10 according to the first embodiment.

The hydrogen tank 9 is equipment for storing hydrogen. The hydrogen tank 9 supplies hydrogen to the fuel cell 6 according to the amount of demand power of the fuel cell 6. Similarly to the LNG tank 1 according to the first embodiment, the hydrogen tank 9 may be any equipment that can store hydrogen.

According to the embodiment, the consumption efficiency of the hydrogen supplied from the hydrogen tank 9 can be improved by providing the condenser 8 and extracting the hydrogen contained in the steam discharged from the fuel cell 6.

By providing the steam turbine 7 in the middle of the route through which the steam is discharged from the fuel cell 6 to the condenser 8, electric power can be generated by the steam discharged from the fuel cell 6.

By providing the hydrogen tank 9 as fuel for the fuel cell 6, the configuration of the entire system can be simplified more than the first embodiment. In addition, carbon dioxide is not discharged unlike a case of using LNG as a fuel.

The present invention is not limited to the above-described embodiment, and constituent elements may be deleted, added, modified and the like. In addition, the constituent elements in more than one embodiment may be combined, replaced or the like to constitute a new embodiment. Even if such an embodiment is directly different from the above-described embodiment, the embodiment having the same spirit as the present invention is considered as being explained as the embodiment of the present invention, and explanation is omitted.

## Claims

1. A fuel cell power generation system **characterized by** comprising:
a fuel cell generating electric power with hydrogen;
a condenser extracting hydrogen contained in steam discharged from the fuel cell; and
a hydrogen supply route which supplies hydrogen extracted by the condenser to the fuel cell.

2. The fuel cell power generation system of claim 1, **characterized by** further comprising:
a separator removing impurities other than hydrogen from a gas containing hydrogen extracted by the condenser.

3. The fuel cell power generation system of claim 1, **characterized by** further comprising:
a steam turbine generating electric power with steam discharged from the fuel cell, wherein
the condenser is supplied with steam discharged from the fuel cell via the steam turbine.

4. The fuel cell power generation system of claim 1, **characterized by** further comprising:
component separation means for separating hydrogen and carbon dioxide from a liquid gas to supply hydrogen to the fuel cell.

5. The fuel cell power generation system of claim 4, **characterized in that** the component separation means includes:
reforming reaction means for chemically decomposing the gas into hydrogen and carbon dioxide by a reforming reaction; and
mixed gas separation means for separating hydrogen and carbon dioxide from mixed gas containing hydrogen and carbon dioxide decomposed by the reforming reaction means.

6. The fuel cell power generation system of claim 5, **characterized in that** the reforming reaction means causes the reforming reaction to be made using the steam discharged from the fuel cell.

7. The fuel cell power generation system of claim 5, **characterized by** further comprising:
cooling means for cooling the mixed gas to be sent to the mixed gas separation means.

8. The fuel cell power generation system of claim 7, **characterized in that** the cooling means includes cooling the mixed gas using hydrogen separated by the reforming reaction means.

9. The fuel cell power generation system of claim 7, **characterized in that** the cooling means includes cooling the mixed gas using air taken in the fuel cell.

10. The fuel cell power generation system of claim 4, **characterized by** further comprising:
a carbon dioxide storage tank storing carbon dioxide separated by the component separation means.

11. The fuel cell power generation system of claim 10, **characterized by** further comprising:
carbon dioxide liquefaction means for liquefying carbon dioxide separated by the component separation means in order to store in the carbon dioxide storage tank.
